# EUROPEAN PATENT APPLICATION

(11) **EP 3 817 083 A1**
(43) Date of publication of application: **05.05.2021**
(21) Application number: 19827576.0
(22) Date of filing: 25.06.2019
(51) Int. Cl.: H01M 2/08, H01M 2/06

(54) **RESIN FILM FOR TERMINAL, AND POWER STORAGE DEVICE USING RESIN FILM FOR TERMINAL**

(30) Priority: 27.06.2018 JP 2018121792
(71) Applicant: Toppan Printing Co., Ltd., Tokyo 110-0016 (JP)
(72) Inventor: MURAKI, Takuya, Tokyo 110-0016 (JP)
(74) Representative: Hoffmann Eitle
(86) International application number: PCT/JP2019/025221
(87) International publication number: WO 2020/004412

(57) **Abstract**

The present disclosure relates to a terminal coating resin film used for sealing current output terminals in power storage devices or power generation devices. The terminal coating resin film comprises a resin composition having adhesion to the current output terminals. The resin composition contains at least one of a thermosetting resin and a thermoplastic resin having a melting point of 160°C or higher and does not contain any thermoplastic resin having a melting point of less than 160°C.

## Description

### [Technical Field]

The present disclosure relates to a terminal coating resin film used for sealing current output terminals of a power storage device or a power generation device, and a power storage device using the terminal coating resin film.

### [Background Art]

In recent years, there is an increasing need of downsized mobile devices and effective usage of electrical energy generated from natural resources. In response to this, research and development of lithium ion batteries (a type of power storage devices) providing higher voltage and having higher energy density are underway. As packaging materials used for such lithium ion batteries, metal cans have typically been used. Recently, to meet the need for providing thinner and more diversified products to which the lithium ion batteries are applied, pouched laminates configured by a metal layer (e.g., aluminum foil) and a resin film, which can be produced at low cost, have become mainstream as packaging materials.

A lithium ion battery in which a battery body is sealed in the above packaging material is referred to as a laminated lithium ion battery. This type of lithium ion battery is provided with current output terminals (which may also be referred to as tab leads). For purposes such as improving adhesion between each current output terminal and the packaging material, a terminal coating resin film (which may also be referred to as a tab sealant) may be arranged covering part of the outer periphery of the current output terminal (e.g., see PTLs 1 to 3).

### [Citation List]

### [Patent Literature]

PTL 1: JP 2008-4316 A
PTL 2: JP 2010-218766 A
PTL 3: JP 2009-259739 A

### [Summary of the Invention]

### [Technical Problem]

Power storage devices, which are referred to as fully solid-state batteries, are under research and development as next generation batteries replacing lithium ion batteries. Fully solid-state batteries are characterized by usage of a solid electrolyte as an electrolytic substance, without using an organic electrolyte solution. Lithium ion batteries cannot be used under temperature conditions higher than the boiling point of their electrolyte solution (about 80°C), whereas fully solid-state batteries can be used under temperature conditions higher than 100°C, and can enhance conductivity of the lithium ions when the batteries are used under high temperature conditions (e.g., 100°C to 150°C).

However, if laminated fully solid-state batteries are produced using the laminates mentioned above as packaging materials, sealing properties of the packages for the fully solid-state batteries may be insufficient due to the terminal coating resin films having insufficient heat resistance.

The present disclosure has been made in light of the issues set forth above and aims to provide a terminal coating resin film having good heat resistance, and a power storage device using the terminal coating resin film.

### [Solution to Problem]

A terminal coating resin film according to the present disclosure is characterized in that it is used for sealing a current output terminal in at least one of a power storage device and a power generation device. The terminal coating resin film comprises a resin composition having adhesion to the current output terminal. The resin composition contains at least one of a thermosetting resin and a thermoplastic resin having a melting point of 160°C or higher, and does not contain any thermoplastic resin having a melting point of less than 160°C.

Terminal coating resin films of conventional art mainly comprise polypropylene, and have a melting point of about 150°C. Therefore, the heat resistance of conventional terminal coating resin films is insufficient if the films are used, for example, in fully solid-state batteries that can have a temperature in the range of 100°C to 150°C. In this regard, the terminal coating resin film according to the present disclosure has good heat resistance because it contains at least one of a thermosetting resin and a thermoplastic resin having a melting point of 160°C or higher, and does not contain any thermoplastic resin having a melting point of less than 160°C. Accordingly, if a power storage device or a power generation device is used under temperature conditions, for example, in the range of 100°C to 150°C, sealing properties of the packages of these devices can be sufficiently maintained. Furthermore, if high current is passed through the current output terminal of the power storage device or the power generation device and the temperature of the current output terminal reaches a temperature range, for example, of 100°C to 150°C, sealing properties of the packages of these devices can be sufficiently maintained. The melting point herein refers to a peak melting temperature which is calculated according to the method described in JIS K7121-1987. If there are two or more independent melting peaks, the lowest peak melting temperature is used.

Power storage devices to which the terminal coating resin film of the present disclosure can be applied may be fully solid-state batteries. However, without being limited to this, the terminal coating resin film may be applied to other power storage devices or power generation devices.

In the present disclosure, the thermosetting resin may be at least one selected from the group consisting of polyimide resins, phenol resins, urea resins, melamine resins, unsaturated polyester resins, urethane resins, allyl resins, epoxy resins, furan resins, and silicone resins. These thermosetting resins have good adhesion to the metal material (e.g., aluminum or nickel) configuring the surface of the current output terminal, and have good heat resistance.

In the present disclosure, the thermoplastic resin may be at least one selected from the group consisting of polyester resins (e.g., polyethylene terephthalate (PET) and copolymers thereof, and polyester resins based on PET components), nylons, polyvinyl alcohol resins, polyvinylidene chloride, polyamide resins, polybutylene terephthalate resins, polyphenylene sulfide, polyetherimide, polysulfone, fluororesins, polyamide imide, and acetyl cellulose. These thermoplastic resins have good adhesion to the metal material (e.g., aluminum or nickel) configuring the surface of the current output terminal, and have good heat resistance.

The terminal coating resin film according to the present disclosure may have a single layer structure or a multilayer structure. If the terminal coating resin film has a single layer structure, the resin composition forming the terminal coating resin film is preferred to be one selected from the group consisting of polyester resins, polyphenylene sulfide, urethane resins, and epoxy resins. Use of a film comprising these resins as a terminal coating resin film can easily achieve an advantageous effect of adhesion to the current output terminal (appropriate fluidity of the resin composition during heat sealing), balanced with insulation properties of the current output terminal (prevention of excessive fluidity of the resin composition during heat sealing).

If the terminal coating resin film has a multilayer structure, the terminal coating resin film can include a first layer and a second layer. The first layer may comprise a resin which is selected from the group consisting of polyester resins having a melting point in the range of 170°C to 280°C and polyphenylene sulfide (PPS) having a melting point in the range of 260°C to 290°C. The second layer may comprise either a thermosetting resin or a thermoplastic resin having a melting point in the range of 160°C to 280°C. The second layer is preferred to be formed on a surface of the first layer facing the current output terminal. If PET or PPS having a sufficiently high melting point is used as a resin for forming the first layer, the first layer will not melt at the time of heat sealing and thus good insulation properties may be achieved for the current output terminal.

If the terminal coating resin film has a multilayer structure including the first and second layers, the terminal coating resin film may further include a third layer formed on a surface of the first layer facing away from the surface on which the second layer is formed. The third layer may comprise a thermosetting resin or a thermoplastic resin having a melting point in the range of 160°C to 280°C.

If the terminal coating resin film has a multilayer structure, the first layer may comprise a thermosetting resin. In this case, the terminal coating resin film is preferred to include a thermosetting resin layer formed at least on one surface of the first layer, and the thermosetting resin layer is preferred to have fluidity which is higher than that of the thermosetting resin forming the first layer. Use of such a configuration can achieve good adhesion to the current output terminal.

The present disclosure provides a power storage device (e.g., fully-solid state battery) including a power storage device body, a current output terminal extended from the power storage device body, a packaging material sandwiching the current output terminal between surfaces thereof and holding the power storage device body therein, and the terminal coating resin film set forth above disposed between the current output terminal and the packaging material.

### [Advantageous Effects of the Invention]

According to the present disclosure, a terminal coating resin film having good heat resistance, and a power storage device using the terminal coating resin film can be provided.

### [Brief Description of the Drawings]

Fig. 1 is a perspective view illustrating a fully solid-state battery that is an embodiment of a power storage device according to the present disclosure.
Fig. 2 is a schematic cross-sectional view illustrating an embodiment of a packaging material.
Figs. 3(a) to 3(c) are schematic cross-sectional views each illustrating a configuration of an inner layer.
Fig. 4 is a schematic cross-sectional view taken along the line IV-IV of Fig. 1, illustrating a configuration of a tab (a terminal coating resin film and a metal terminal) of the fully solid-state battery.
Figs. 5(a) to 5(c) are schematic cross-sectional views each illustrating a configuration of a terminal coating resin film.
Figs. 6(a) to 6(e) are schematic diagrams illustrating a method of producing evaluation samples of examples and comparative examples.

### [Description of the Embodiments]

Referring to the drawings, some embodiments of the present disclosure will be specifically described. In the drawings, like components are given like reference signs to omit duplicate description. Also, dimensional ratios in the drawings are not limited to the ratios shown in the drawings.

### <Power storage device>

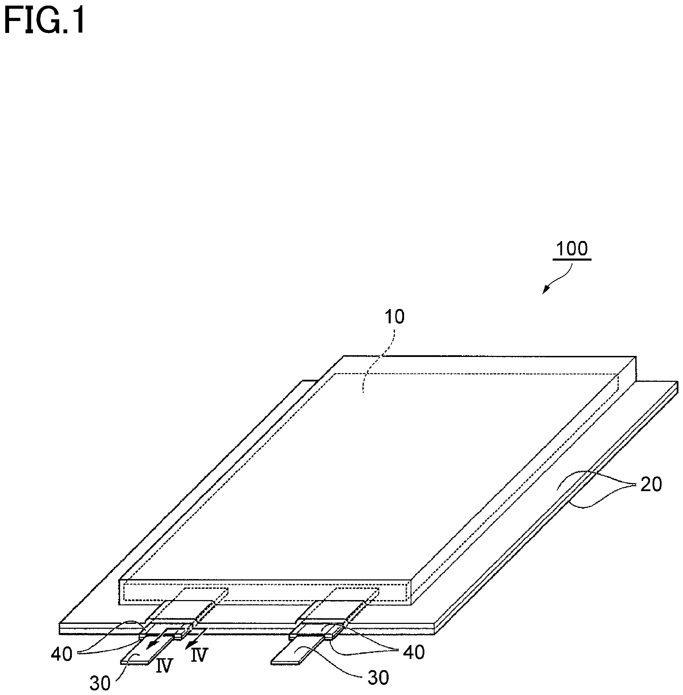

Fig. 1 is a schematic perspective view illustrating a configuration of a power storage device according to the present embodiment. Fig. 1 shows a power storage device 100 as an example of a fully solid-state battery, referring to which the following description will be provided. It should be noted that a power storage device having a configuration shown in Fig. 1 may be referred to as a battery pack or a battery cell.

The power storage device 100 as a fully solid-state battery includes a power storage device body 10, a packaging material 20, two metal terminals 30 (current output terminals), and a terminal coating resin film 40 (tab sealant). The power storage device body 10 is a battery body that charges or discharges current. The packaging material 20 is arranged covering surfaces of the power storage device body 10 and in contact with part of the terminal coating resin film 40.

### (Packaging material)

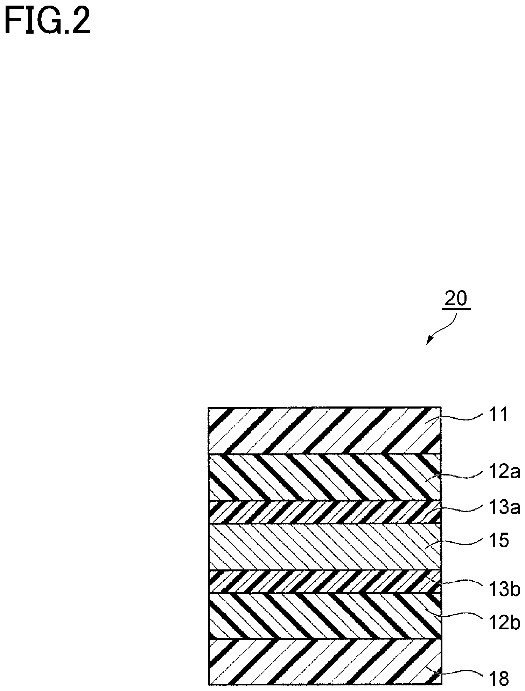

Fig. 2 is a cross-sectional view illustrating an example of a cross section of the packaging material 20. The packaging material 20 is preferred to have a multilayer structure in which a substrate layer 11, a first adhesive layer 12a, a first anticorrosion treatment layer 13a, a barrier layer (metal foil layer) 15, a second anticorrosion treatment layer 13b, a second adhesive layer 12b, and an inner layer 18 are provided in this order from the outer side toward the inner side (power storage device body 10 side). If the inner layer 18 contains PET and/or a copolymer thereof and has a peak melting temperature in the range of 160°C to 280°C, the packaging material 20 can satisfy the heat resistance required for the packaging material of the power storage device 100 (fully solid-state battery) used under temperature conditions of 100°C to 150°C, for example. It should be noted that the copolymer of PET in the present disclosure refers to a copolymer containing units of polyethylene terephthalate and units of another resin. This other resin may be polybutylene terephthalate, for example.

The inner layer 18 contains polyethylene terephthalate (PET) and/or a copolymer thereof and has a peak melting temperature in the range of 160°C to 280°C. The substrate layer 11 is preferred to have a peak melting temperature higher than that of the inner layer 18. If the substrate layer 11 has a peak melting temperature higher than that of the inner layer 18, the appearance of the packaging material 20 is prevented from being impaired due to melting of the substrate layer 11 (outer layer) at the time of heat sealing. First, the inner layer 18 and the substrate layer 11 will be explained as follows.

As the inner layer 18, a commercially available crystalline PET film (peak melting temperature: about 255°C) may be used. The peak melting temperature of the inner layer 18 may be controlled according to the heat resistance required of the inner layer 18 (e.g., activation temperature conditions of the power storage device 100). For example, a crystallinity-controlled or unstretched crystalline PET film, or a copolymer film containing units of polyethylene terephthalate and units of another resin, or a PET film containing crystalline PET and amorphous PET may be used. Alternatively, a polyester resin which is based on PET components may be used as a material for the inner layer 18. Such a polyester resin has structural units derived from ethylene glycol, structural units derived from a terephthalic acid, and other structural units. Dihydric alcohol components from which the structural units of the polyester resin are derived may include neopentyl glycol, 1,4-butanediol, and diethylene glycol. Acid components from which the structural units of the polyester resin is derived may include an isophthalic acid, adipic acid, and sebacic acid. The melting point of the polyester resin can be controlled by controlling the amount of these structural units. In the following, a copolymer of PET or a polyester resin based on a component of PET is termed a PET resin.

As mentioned above, the peak melting temperature of the inner layer 18 may be in the range of 160°C to 280°C. If the temperature is less than 160°C, heat resistance of the inner layer 18 may be insufficient, and if it exceeds 280°C, the temperature for heat sealing may be excessively high. The lower limit of the peak melting temperature of the inner layer 18 may be 165°C, 175°C, 185°C, 195°C, 200°C, 205°C, 215°C, 225°C or 235°C. The upper limit of the peak melting temperature of the inner layer 18 may be 275°C, 268°C, 262°C or 252°C.

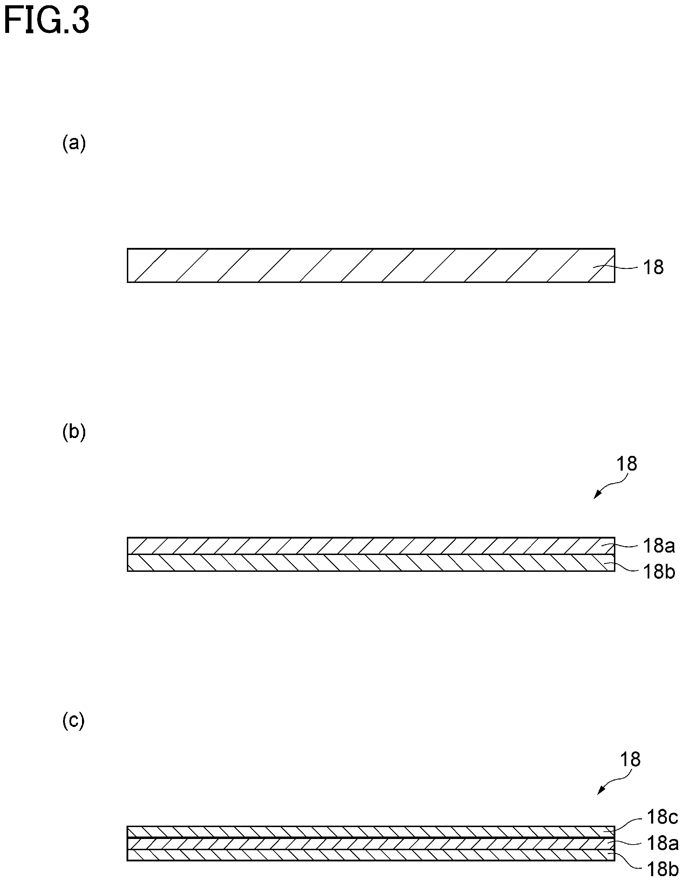

The inner layer 18 may have a single layer structure, or may have a multilayer structure. As shown in Fig. 3(a), the inner layer 18, if it has a single layer structure, may be a crystalline PET film (peak melting temperature: about 255°C). Alternatively, a crystallinity-controlled or unstretched crystalline PET film, or a PET resin film having a low peak melting temperature in a range, for example, of 160°C to 250°C may be used. If a PET film, or a PET resin film having a low peak melting temperature is used as an inner layer 18, a crystalline PET film (peak melting temperature: about 255°C) can be used as a substrate layer 11.

The inner layer 18, if it has a single layer structure, is preferred to have a thickness in the range of 10 µm to 100 µm, and more preferably 20 µm to 80 µm. When the inner layer 18 has a thickness of 10 µm or more, sealing properties and insulation properties may be easily secured, and when it has a thickness of 100 µm or less, the production cost may be reduced.

As shown in Fig. 3(b), the inner layer 18 may have a two-layer structure including a first layer 18a and a second layer 18b which is formed on an inner surface of the first layer 18a. The first layer 18a is preferred to contain PET and /or PET resin and have a peak melting temperature in the range of 170°C to 280°C. The second layer 18b is preferred to contain PET and /or PET resin and have a peak melting temperature which is lower than that of the first layer 18a. The peak melting temperature of the second layer 18b may, for example, be in the range of 160°C to 270°C. When the peak melting temperature of the first layer 18a is expressed as TA and that of the second layer 18b is expressed as TB, the difference therebetween (TA-TB) is preferred to be 10°C or more, and more preferably in the range of 20°C to 100°C. When the temperature difference is 10°C or or more, even better sealing strength can be achieved.

The first layer 18a is preferred to have a thickness in the range of 5 µm to 500 µm, and more preferably 20 µm to 200 µm. When the first layer 18a has a thickness of 5 µm or more, insulation properties can be easily secured, and when it has a thickness of 500 µm or less, the production cost can be reduced.

From the perspectives of heat resistance and sealing strength, the second layer 18b may contain a thermosetting resin instead of PET and/or PET resin, or may contain both PET and/or PET resin and a thermosetting resin. The thermosetting resin may be a polyimide resin, phenol resin, urea resin, melamine resin, unsaturated polyester resin, urethane resin, allyl resin, epoxy resin, furan resin, or silicone resin. These resins may be used singly or in combination of two or more.

The second layer 18b is preferred to have a thickness in the range of 5 µm to 500 µm, and more preferably 20 µm to 200 µm. When the second layer 18b has a thickness of 5 µm or more, sealing properties can be easily secured, and when it has a thickness of 500 µm or less, the production cost can be reduced.

As shown in Fig. 3(c), the inner layer 18 may have a three-layer structure including a first layer 18a, a second layer 18b, and a third layer 18c which is formed on a surface of the first layer 18a facing away from the surface on which the second layer 18b is formed. The third layer 18c is preferred to contain PET and have a peak melting temperature which is lower than that of the first layer 18a. The third layer 18c may have a peak melting temperature in the range, for example, of 160°C to 270°C. When the peak melting temperature of the first layer 18a is expressed as TA and that of the third layer 18b is expressed as TC, the difference therebetween (TA-TC) is preferred to be 10°C or more. When the temperature difference is 10°C or or more, even better sealing strength can be achieved.

From the perspectives of heat resistance and sealing strength, the third layer 18c may contain a thermosetting resin instead of PET and/or PET resin, or may contain both PET and/or PET resin and a thermosetting resin. The thermosetting resin may be a polyimide resin, phenol resin, urea resin, melamine resin, unsaturated polyester resin, urethane resin, allyl resin, epoxy resin, furan resin, or silicone resin. These resins may be used singly or in combination of two or more.

The third layer 18c is preferred to have a thickness in the range of 5 µm to 500 µm, and more preferably 20 µm to 200 µm. When the third layer 18c has a thickness of 5 µm or more, high sealing strength can be easily secured, and when it has a thickness of 500 µm or less, the production cost can be reduced. The second and third layers 18b and 18c may have the same configuration or different configurations. The inner layer 18 may contain, for example, various additives (e.g., a flame retarder, slip agent, anti-blocking agent, antioxidant, light stabilizer, and tackifier).

As mentioned above, the substrate layer 11 may have a peak melting temperature higher than that of the inner layer 18. If the inner layer 18 has a multilayer structure, the peak melting temperature of the inner layer 18 refers to that of the layer (e.g., the first layer 18a) having a maximum peak melting temperature. The substrate layer 11 is preferred to have a peak melting temperature higher than that of the inner layer 18 by 10°C or more, and preferably 30°C or more. The resin film that can be used for the substrate layer 11 and has a peak melting temperature in the above range may be a nylon film, PET film, polyamide film, polyphenylene sulfide film (PPS film), or the like. The substrate layer 11 may be a commercially available film, or may be a coating film (obtained by applying and drying a coating liquid). The substrate layer 11 may have a single layer structure or a multilayer structure, or may be formed by applying a thermosetting resin. The substrate layer 11 may contain, for example, various additives (e.g., a flame retarder, slip agent, anti-blocking agent, antioxidant, light stabilizer, and tackifier).

When the peak melting temperature of the substrate layer 11 is expressed as T11 and that of the inner layer 18 is expressed as T18, the difference therebetween (T11-T18) is preferred to be 20°C or more, and more preferably in the range of 40°C to 100°C. When the temperature difference is 20°C or more, the appearance of the packaging material 20 is even more sufficiently prevented from being impaired due to heat sealing. The substrate layer 11 is preferred to have a thickness in the range of 5 µm to 50 µm, and more preferably 12 µm to 30 µm.

The following description explains the first adhesive layer 12a, the first anticorrosion treatment layer 13a, the barrier layer (metal foil layer) 15, the second anticorrosion treatment layer 13b, and the second adhesive layer 12b. These layers have heat resistance equivalent to or exceeding that of the inner layer 18 or the substrate layer 11.

The adhesive layers 12a and 12b may have sufficient heat resistance. Thus, a known adhesive can be appropriately selected and used, such as a generally used adhesive for dry lamination, an acid-modified thermally adhesive resin, thermosetting adhesive, or the like. The thermosetting adhesive may, for example, be a polyester urethane adhesive, or epoxy adhesive.

The barrier layer 15 is a metal layer having electrical conductivity. The material used for the barrier layer 15 may, for example, be aluminum, stainless steel, or the like. However, from the perspective of cost or weight (density), aluminum is preferred. The anticorrosion treatment layers 13a and 13b protect the barrier layer 15. As an example of the anticorrosion treatment layers 13a and 13b, those layers which contain a rare earth element oxide (e.g., cerium oxide), and phosphoric acid or phosphate may be mentioned. As shown in Fig. 2, it is preferred that the anticorrosion treatment layers 13a and 13b are respectively formed on both surfaces of the barrier layer 15, considering performance. However, from the perspective of cost, only the anticorrosion treatment layer 13b may be arranged.

### (Metal terminal)

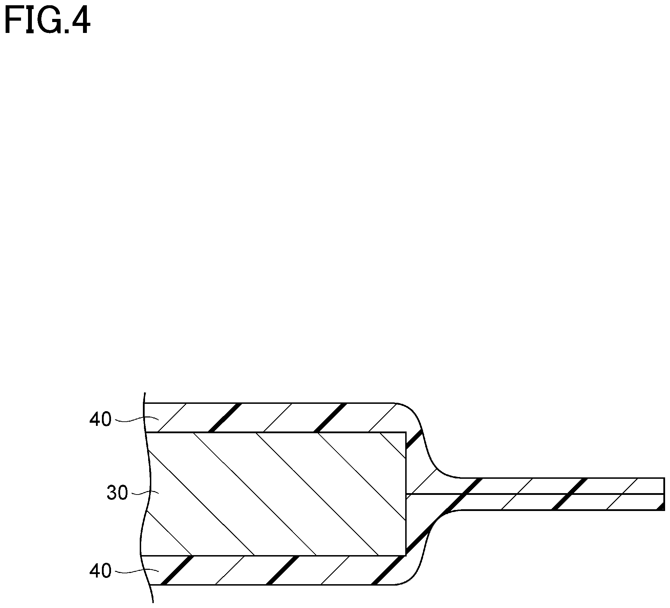

Fig. 4 is a cross-sectional view taken along the line IV-IV of Fig. 1 illustrating a terminal coating resin film and a metal terminal. Of two metal terminals 30, 30 shown in Fig. 1, one is electrically connected to the positive electrode of the power storage device body 10 and the other is electrically connected to the negative electrode thereof. The two metal terminals 30, 30 are extended to the outside of the packaging material 20 from the power storage device body 10. The two terminals 30, 30 may each have a plate-like shape, for example.

Metal can be used as a material for the metal terminals 30. The material used for the metal terminals 30 may be determined considering, for example, the structure of the power storage device body 10, materials of the components of the power storage device body 10, and the like. For example, if the power storage device 100 is a fully solid-state battery, aluminum is preferred to be used as a material for the metal terminal 30 connected to the positive electrode of the power storage device body 10. As a material for the metal terminal 30 connected to the negative terminal of the power storage device body 10, copper having a nickel-plated layer on the surface thereof, or nickel is preferred to be used.

The metal terminals 30 each have a thickness depending on the size or capacity of the fully solid-state battery. If the fully solid-state battery has a small size, the thickness of each metal terminal 30 may be 50 µm or more, for example. If the fully solid-state battery has a large size suitable for electrical storage or vehicle installation, the thickness of each metal terminal 30 can be appropriately determined within the range of 100 µm to 500 µm, for example.

### (Terminal coating resin film)

As shown in Fig. 4, the terminal coating resin film 40 is arranged covering part of the outer periphery of a metal terminal 30. Arrangement of the terminal coating resin film 40 between the metal terminal 30 and the packaging material 20 can achieve even higher sealing properties and insulation properties for the power storage device 100. The terminal coating resin film 40 has heat resistance equivalent to or exceeding that of the inner layer 18 or the substrate layer 11.

The terminal coating resin film 40 comprises a resin composition having adhesion to the metal terminal 30. The resin composition contains at least one of a thermosetting resin and a thermoplastic resin having a peak melting temperature (melting point) of 160°C or higher, and does not contain any thermoplastic resin having a peak melting temperature of less than 160°C. The terminal coating resin film 40 having such a configuration can sufficiently maintain sealing properties of the power storage device 100 even when the power storage device is used under temperature conditions in the range of 100°C to 150°C, for example, or even when the temperature of the metal terminal 30 reaches a temperature range of 100°C to 150°C, for example. The resin composition may contain at least one of a thermosetting resin and a thermoplastic resin having a peak melting temperature (melting point) of 200°C or higher, and may contain no thermoplastic resin having a peak melting temperature of less than 200°C.

The thermosetting resin used for the terminal coating resin film 40 may be at least one selected from the group consisting of polyimide resins, phenol resins, urea resins, melamine resins, unsaturated polyester resins, urethane resins, allyl resins, epoxy resins, furan resins, and silicone resins. These thermosetting resins have good adhesion to the metal material (e.g., aluminum or nickel) configuring the surface of the metal terminal 30, and good heat resistance.

The thermoplastic resin used for the terminal coating resin film 40 may be at least one selected from the group consisting of PET, the PET resins mentioned above, nylons, polyvinyl alcohol resins, polyvinylidene chloride, polyamide resins, polybutylene terephthalate resins, polyphenylene sulfide, polyetherimide, polysulfone, fluororesins, polyamide imide, and acetyl cellulose. These thermoplastic resins have good adhesion to the metal material (e.g., aluminum or nickel) configuring the surface of the metal terminal 30, and good heat resistance.

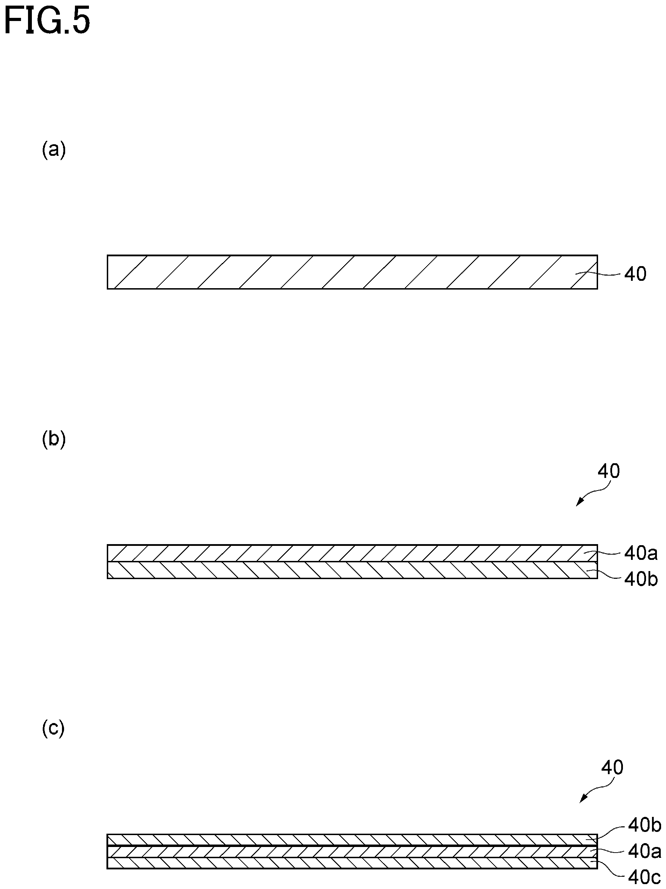

The terminal coating resin film 40 may have a single layer structure or a multilayer structure. If the terminal coating resin film 40 has a single layer structure (see Fig. 5(a)), the resin composition configuring the terminal coating resin film 40 is preferred to be a thermoplastic resin selected from the group consisting of PET, the PET resins mentioned above, polyphenylene sulfide, urethane resins, and epoxy resins, and/or a thermosetting resin selected from the group consisting of urethane resins, and epoxy resins. Use of a film comprising these resins as a terminal coating resin film 40 can easily achieve an advantageous effect of adhesion to the metal terminal 30 (appropriate fluidity of the resin composition during heat sealing), balanced with insulation properties of the metal terminal 30 (prevention of excessive fluidity of the resin composition during heat sealing).

If the terminal coating film 40 has a multilayer structure, the terminal coating resin film 40 may include a first layer 40a and a second layer 40b which is formed on the surface of the first layer 40a facing the metal terminal 30. The first layer 40a in this case comprises PET and/or a PET resin having a peak melting temperature in the range of 170°C to 270°C, or polyphenylene sulfide (PPS) having a peak melting temperature in the range of 260°C to 300°C, and the second layer 40b comprises a thermosetting resin, or a thermoplastic resin having a peak melting temperature in the range of 160°C to 270°C (see Fig. 5(b)). If PET and/or a PET resin, or PPS having sufficiently high peak melting temperature is used as a resin forming the first layer 40a, the first layer 40a will not melt at the time of heat sealing and thus good insulation properties can be achieved for the metal terminal 30. The PET or the PET resin forming the first layer 40a may have a peak melting temperature of 210°C or higher. The PET or the PET resin forming the second layer 40b may have a peak melting temperature of 200°C or higher. When the peak melting temperature of the first layer 40a is expressed as SA and that of the second layer 40b is expressed as SB, the difference therebetween (SA-SB) is preferred to be 10°C or more, and more preferably in the range of 20°C to 100°C. When the temperature difference is 10°C or more, the metal terminal 30 can achieve good insulation properties.

The first layer 40a is preferred to have a thickness in the range of 5 µm to 500 µm, and more preferably 20 µm to 200 µm. When the first layer 40a has a thickness of 5 µm or more, insulation properties can be easily secured, and if it has a thickness of 500 µm or less, the production cost can be reduced. The second layer 40b is preferred to have a thickness in the range of 5 µm to 500 µm, and more preferably 20 µm to 200 µm. When the second layer 40b has a thickness of 5 µm or more, sealing properties can be easily secured, and if it has a thickness of 500 µm or less, the production cost can be reduced.

If the terminal coating resin film 40 has a multilayer structure including the first and second layers 40a and 40b, the film 40 may further include a third layer 40c which is formed on a surface of the first layer 40a facing away from the surface on which the second layer 40b is formed (see Fig. 5(c)). The third layer 40c may comprise a thermosetting resin, or a thermoplastic resin having a peak melting temperature in the range of 160°C to 270°C.

If the first layer 40a comprises a thermosetting resin, the second layer 40b is preferred to be made of a thermosetting resin whose fluidity is higher than that of the thermosetting resin forming the first layer 40a. With this configuration, good adhesion to the metal terminal 30 can be achieved by the second layer 40b during heat sealing. The third layer 40c may be made of a thermosetting resin whose fluidity is higher than that of the thermosetting resin forming the first layer 40a. With this configuration, a power storage device 100 having even better adhesion can be achieved.

The third layer 40c is preferred to have a thickness in the range of 5 µm to 500 µm, and more preferably 20 µm to 200 µm. When the third layer 40c has a thickness of 5 µm or more, sealing properties can be easily secured, and if it has a thickness of 500 µm or less, the production cost can be reduced.

An embodiment of the present disclosure has been described so far, but the present invention should not be limited to the embodiment described above. In the embodiment described above, a fully solid-state battery has been shown as a power storage device, for example, to which the terminal coating resin film 40 is applied. However, the terminal coating resin film 40 may be applied to other power storage devices (e.g., lithium ion batteries), or power generation devices.

### [Examples]

In the following, the present disclosure will be more specifically described by way of examples. However, the present invention should not be limited to the following examples.

### <Preparation of packaging material>

As a substrate layer, a highly heat resistant polyamide film (thickness: 25 µm, manufactured by Unitika, Ltd.) having a peak melting temperature of 300°C was used. As a metal foil layer, an aluminum foil (thickness 40 µm) was prepared. As an inner layer, a PET film (thickness: 75 µm, single layer structure) having a peak melting temperature of 255°C was prepared. The substrate layer and the metal foil layer were bonded to each other using a thermosetting adhesive (polyester urethane adhesive), while the metal foil layer and the inner layer were bonded to each other using the same adhesive to thereby obtain a packaging material having sufficient heat resistance.

### <Preparation of terminal coating resin film (single layer structure)>

### (Example 1)

An epoxy resin film (thickness: 100 µm) was prepared as a terminal coating resin film (single layer structure).

### (Example 2)

A urethane resin film (thickness: 100 µm) was prepared as a terminal coating resin film (single layer structure).

### (Example 3)

A nylon resin film (thickness: 100 µm, melting point: 225°C) was prepared as a terminal coating resin film (single layer structure).

### (Example 4)

A PET film (thickness: 100 µm, melting point: 225°C) was prepared as a terminal coating resin film (single layer structure).

### (Example 5)

A polyester copolymer film (thickness: 100 µm, melting point: 160°C) was prepared as a terminal coating resin film (single layer structure).

### (Example 6)

A PPS film (thickness: 100 µm, melting point: 290°C) was prepared as a terminal coating resin film (single layer structure).

### (Comparative Example 1)

A PP film (thickness: 100 µm, melting point: 140°C) was prepared as a terminal coating resin film (single layer structure).

### <Preparation of terminal coating resin film (two-layer structure)>

### (Example 7)

A two-layer structure terminal coating resin film including a first layer and a second layer was prepared by bonding the following films to each other.
First layer: Epoxy resin film (thickness: 50 µm)
Second layer: PET film (thickness: 50 µm, melting point: 255°C)

### (Example 8)

A two-layer structure terminal coating resin film including a first layer and a second layer was prepared by bonding the following films to each other.
First layer: Urethane resin film (thickness: 50 µm)
Second layer: Epoxy resin film (thickness: 50 µm)

### (Example 9)

A two-layer structure terminal coating resin film including a first layer and a second layer was prepared by bonding the following films to each other.
First layer: Epoxy resin film (thickness: 50 µm)
Second layer: Epoxy resin film (thickness: 50 µm)

### (Example 10)

A two-layer structure terminal coating resin film including a first layer and a second layer was prepared by bonding the following films to each other.
First layer: PPS film (thickness: 50 µm, melting point: 290°C)
Second layer: PET film (thickness: 50 µm, melting point: 255°C)

### [Example 11]

A two-layer structure terminal coating resin film including a first layer and a second layer was prepared by bonding the following films to each other.
First layer: PPS film (thickness: 50 µm, melting point: 290°C)
Second layer: Epoxy resin film (thickness: 50 µm)

### (Comparative Example 2)

A two-layer structure terminal coating resin film including a first layer and a second layer was prepared by bonding the following films to each other.
First layer: Epoxy resin film (thickness: 50 µm)
Second layer: PP film (thickness: 50 µm, melting point 140°C)

### (Comparative Example 3)

A two-layer structure terminal coating resin film including a first layer and a second layer was prepared by bonding the following films to each other.
First layer: PP film (thickness: 50 µm, melting point 140°C)
Second layer: Epoxy resin film (thickness: 50 µm)

### (Comparative Example 4)

A two-layer structure terminal coating resin film including a first layer and a second layer was prepared by bonding the following films to each other.
First layer: PP film (thickness: 50 µm, melting point 140°C)
Second layer: PET film (thickness: 50 µm, melting point: 255°C)

### <Evaluation of insulation properties>

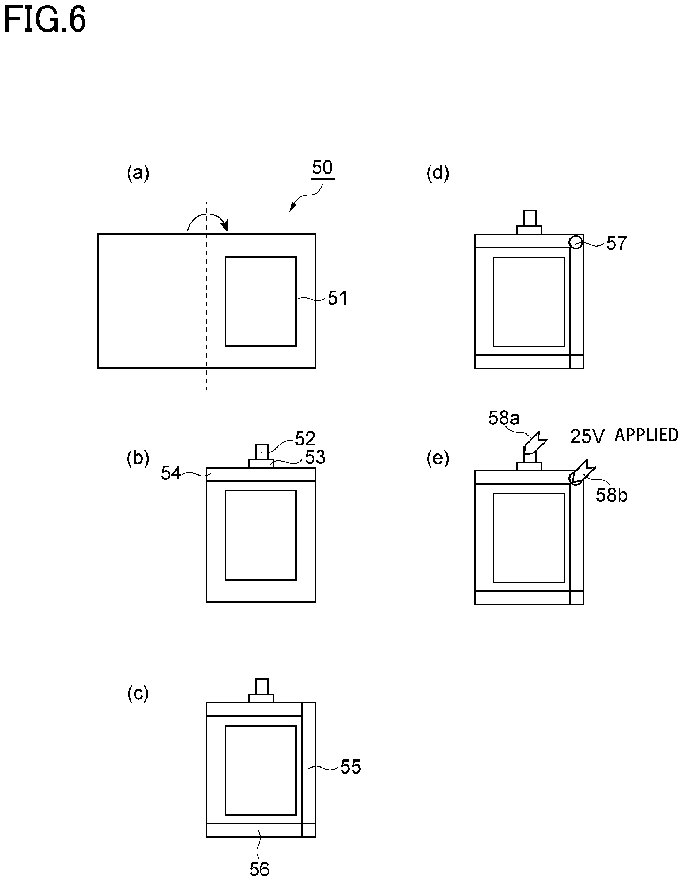

Referring to Figs. 6(a) to 6(e), a method of evaluating adhesion to a current output terminal will be described. The packaging material was cut to 120 mm × 200 mm to prepare samples 50. The samples 50 were each loaded on a cold forming die so that the inner layer was in contact with the protrusion of the forming machine, followed by deep drawing of 2.0 mm at a forming rate of 15 mm/sec, thereby forming a recess 51. After that, the samples 50 were each folded in two (see Fig. 6(a)). Then, in a state where a metal terminal 52 (material: aluminum) and each of terminal coating resin films 53 of examples and comparative examples were sandwiched between surfaces of each folded sample 50, a 100-mm upper side 54 was heat-sealed (see Figs. 6(b)). After that, a 120-mm lateral side 55 and a 100-mm lower side 56 were heat-sealed (see Fig. 6(c)). For contact with an electrode, a portion of the outer layer of each sample 50 was scraped to form an exposed portion 57 of the metal foil layer (see Fig. 6(d)). Then, after leaving the samples in an oven at 60°C for 1 week, electrodes 58a and 58b were respectively connected to the tab 52 and the exposed portion 57 of the metal foil layer of each sample, followed by applying 25 V using a withstand voltage/insulation resistance testing machine (TOS 9201 manufactured by KIKUSUI), and the resistance then was measured (see Fig. 6 (e)).
A: 200 MΩ or more
B: 30 MΩ or more and less than 200 MΩ.
C: Less than 30 MΩ

### <Evaluation of adhesion to current output terminal>

Measurement samples were prepared as in the above item <Evaluation of insulation properties> except that no exposed portion 46 of the metal foil layer was formed. A red penetrant (manufactured by TASETO Co., Ltd.) was sprayed on the joint between the current output terminal and the terminal coating film of each of the samples of examples and comparative examples. After lapse of 10 minutes, the samples were unfolded, and presence or absence of the penetrant (degree of red) inside was visually confirmed to evaluate adhesion. The samples were evaluated based on the following criteria, and those samples which were evaluated to be C were determined to be failures. Tables 1 to 4 show the results.
A: No entry of the penetrant was confirmed.
B: No entry of the penetrant was confirmed on the inside of the package, but the penetrant was confirmed to have penetrated to part of the joint between the current output terminal and the terminal coating film.
C: Part of the package was confirmed to be dyed red on the inside thereof due to entry of the penetrant.

**[Table 1]**

| Single layer structure | | Example 1 | Example 2 | Example 3 | Example 4 |
|---|---|---|---|---|---|
| Terminal coating resin film | Material | Epoxy resin | Urethane resin | Nylon | PET |
| | Type | Thermosetting | Thermosetting | Thermoplastic | Thermoplastic |
| | Melting Point | - | - | 225°C | 225°C |
| Evaluation | Insulation properties | B | B | B | B |
| | Adhesion | A | A | A | A |

**[Table 2]**

| Single layer structure | | Example 5 | Example 6 | Comparative Example 1 |
|---|---|---|---|---|
| Terminal coating resin film | Material | Polyester copolymer | PPS | PP |
| | Type | Thermoplastic | Thermoplastic | Thermoplastic |
| | Melting Point | 160°C | 290°C | 140°C |
| Evaluation | Insulation properties | B | B | c |
| | Adhesion | A | A | c |

**[Table 3]**

| Multilayer structure | | Example 7 | Example 8 | Example 9 | Example 10 | Example 11 |
|---|---|---|---|---|---|---|
| First | Material | Epoxy resin | Urethane | Epoxy resin | PPS | PPS |
| layer 40a | | | resin | | | |
| | Type | Thermo-sett ing | Thermo-sett ing | Thermo-setting | Thermo- plastic | Thermo- plastic |
| | Melting Point | - | - | - | 290°C | 290°C |
| Second layer 40b | Material | PET | Epoxy resin | Epoxy resin | PET | Epoxy resin |
| | Type | Thermo-pla stic | Thermo-sett ing | Thermo-setting | Thermo- plastic | Thermo-setting |
| | Melting Point | 255°C | - | - | 255°C | - |
| Evalua-ti on | Insulation properties | A | A | A | A | A |
| | Adhesion | A | A | A | A | A |

**[Table 4]**

| Multilayer structure | | Comparative Example 2 | Comparative Example 3 | Comparative Example 4 |
|---|---|---|---|---|
| First layer 40a | Material | Epoxy resin | PP | PP |
| | Type | Thermosetting | Thermoplastic | Thermoplastic |
| | Melting Point | - | 140°C | 140°C |
| Second layer 40b | Material | PP | Epoxy resin | PET |
| | Type | Thermoplastic | Thermosetting | Thermoplastic |
| | Melting Point | 140°C | - | 255°C |
| Evaluation | Insulation properties | B | B | B |
| | Adhesion | c | c | c |

### [Industrial Applicability]

According to the present disclosure, a terminal coating resin film having good heat resistance, and a power storage device using the terminal coating resin film can be provided.

### [Reference Signs List]

- 10 ...: Power storage device
- 20 ...: Packaging material
- 30 ...: Metal terminal (current output terminal)
- 40 ...: Terminal coating resin film
- 40a ...: First layer
- 40b ...: Second layer
- 40c ...: Third layer
- 100 ...: Power storage device

## Claims

1. A terminal coating resin film that seals a current output terminal in at least one of a power storage device and a power generation device, wherein
the terminal coating resin film comprises a resin composition having adhesion to the current output terminal; and
the resin composition contains at least one of a thermosetting resin and a thermoplastic resin having a melting point of 160°C or higher, and does not contain any thermoplastic resin having a melting point of less than 160°C.

2. The terminal coating resin film according to claim 1, wherein the power storage device is a fully solid-state battery.

3. The terminal coating resin film according to claim 1 or 2, wherein
the thermosetting resin is at least one selected from a group consisting of polyimide resins, phenol resins, urea resins, melamine resins, unsaturated polyester resins, urethane resins, allyl resins, epoxy resins, furan resins, and silicone resins; and
the thermoplastic resin is at least one selected from a group consisting of polyester resins, nylons, polyvinyl alcohol resins, polyvinylidene chloride, polyamide resins, polybutylene terephthalate resins, polyphenylene sulfide, polyetherimide, polysulfone, fluororesins, polyamide imide, and acetyl cellulose.

4. The terminal coating resin film according to any one of claims 1 to 3, wherein the terminal coating resin film has a single layer structure comprising the resin composition.

5. The terminal coating resin film according to claim 4, wherein the resin composition is one selected from a group consisting of polyester resins, polyphenylene sulfide, urethane resins, and epoxy resins.

6. The terminal coating resin film according to any one of claims 1 to 3, wherein
the terminal coating resin film has a multilayer structure comprising
a first layer comprising either a polyester resin having a melting point in a range of 170°C to 280°C or polyphenylene sulfide having a melting point in a range of 260°C to 290°C, and
a second layer comprising either a thermosetting resin or a thermoplastic resin having a melting point in a range of 160°C to 280°C; and
the second layer is formed on a surface of the first layer facing the current output terminal.

7. The terminal coating resin film according to claim 6, wherein
the first layer comprises polyethylene terephthalate; and
the second layer comprises polyethylene terephthalate having a low melting point.

8. The terminal coating resin film according to claim 7, wherein
the polyethylene terephthalate having a low melting point contains structural units derived from ethylene glycol, structural units derived from a terephthalic acid, and other structural units; and
the other structural units are derived from a dihydric alcohol component which is at least one selected from a group consisting of neopentyl glycol, 1,4-butanediol, and diethylene glycol.

9. The terminal coating resin film according to claim 7 or 8, wherein
the polyethylene terephthalate having a low melting point contains structural units derived from ethylene glycol, structural units derived from a terephthalic acid, and other structural units; and
the other structural units are derived from an acid component which is at least one selected from a group consisting of an isophthalic acid, adipic acid, and sebacic acid.

10. The terminal coating resin film according to any one of claims 6 to 9, wherein, when the first layer has a melting point expressed by SA and the second layer has a melting point expressed by SB, a difference SA-SB is 10°C or more.

11. The terminal coating resin film according to any one of claims 6 to 10, wherein
the terminal coating resin film further includes a third layer formed on a surface of the first layer facing away from the surface on which the second layer is formed; and
the third layer comprises a thermosetting resin or a thermoplastic resin having a melting point in a range of 160°C to 280°C.

12. The terminal coating resin film according to any one of claims 1 to 3, wherein
the terminal coating resin film has a multilayer structure including
a first layer comprising a thermosetting resin, and
a thermosetting resin layer formed on at least one surface of the first layer; and
the thermosetting resin layer has fluidity higher than that of the thermosetting resin forming the first layer.

13. A power storage device comprising:
a power storage device body;
a current output terminal extended from the power storage device body;
a packaging material sandwiching the current output terminal between surfaces thereof and holding the power storage device body therein; and
the terminal coating resin film according to any one of claims 1 to 12 disposed between the current output terminal and the packaging material.

14. The power storage device according to claim 13, wherein the power storage device is a fully solid-state battery.
